# EUROPÄISCHE PATENTSCHRIFT

(11) **EP 3 705 737 B1**
(45) Veröffentlichungstag und Bekanntmachung des Hinweises auf die Patenterteilung: **03.11.2021**
(21) Anmeldenummer: 20157858.0
(22) Anmeldetag: 18.02.2020
(51) Int. Cl.: F16B 7/18, F16B 37/04

(54) **VERBINDER MIT ÜBER EINEN HEBELARM VERBUNDENEN GREIFELEMENTEN**
CONNECTOR WITH GRIPPING ELEMENTS CONNECTED VIA A LEVER ARM
CONNECTEUR POURVU D'ÉLÉMENTS DE PRÉHENSION RACCORDÉS À L'AIDE D'UN BRAS DE LEVIER

(30) Priorität: 06.03.2019 DE 102019202993
(43) Veröffentlichungstag der Anmeldung: 09.09.2020
(73) Patentinhaber: Robert Bosch GmbH, 70442 Stuttgart (DE)
(72) Erfinder: Argentino, Domenico, 70806 Kornwestheim (DE); Duerr, Damiano, 70188 Stuttgart (DE)

(56) Entgegenhaltungen:
- DE-U1- 9 304 726
- DE-U1- 20 115 623
- JP-A- 2009 014 067
- JP-A- 2010 014 209
- JP-U- S6 348 008
- KR-A- 20150 027 466

## Beschreibung

Die Erfindung betrifft einen Verbinder gemäß dem Oberbegriff von Anspruch 1 und einen Bausatz mit einem derartigen Verbinder.

Aus dem Katalog "Mechanik-Grundelemente 13.2", der am 25.01.2019 unter der Internetadresse http://www.boschrexroth.com/various/utilities/mediadirectory/ download/index.jsp?object_nr=3842540391 abrufbar war, ist auf Seite 3-17 ein Bausatz mit einem Verbinder, der als Winkel bezeichnet wird, gezeigt. Der Bausatz umfasst einen ersten und einen zweiten Profilstab aus stranggepresstem Aluminium, welche mit dem Verbinder unter einem Winkel von 90° fest miteinander verbunden sind. Hierfür werden zwei gesonderte Schraubbolzen verwendet, die in eine jeweils zugeordnete Hammermutter eingeschraubt sind.

Aus der EP 1 201 942 B1 ist ein ähnlicher Verbinder bekannt, der mittels eines einzigen Schraubbolzens an den beiden zugeordneten Profilstäben befestigbar ist. Das dort verwendete Konstruktionsprinzip lässt sich aber nicht ohne Weiteres auf die aus obigem Katalog bekannten stranggepressten Profilstäbe übertragen, da deren genormte Abmessungen hierfür nicht geeignet sind.

Ein weiterer Verbinder ist aus der JP S63 48008 U bekannt.

Ein Vorteil des erfindungsgemäßen Verbinders besteht darin, dass er mit den aus o.g. Katalog bekannten Profilstäben verwendbar ist, wobei nur ein einziger Schraubbolzen festgedreht werden muss, um den Verbinder mit beiden Profilstäben zu verspannen. Der Verbinder ist überdies besonders kostengünstig.

Gemäß dem selbständigen Anspruch wird vorgeschlagen, dass ein Hebel vorgesehen ist, der an dem Grundkörper in einem Drehgelenk drehbar gelagert ist, wobei das Drehgelenk einen ersten und einen zweiten Hebelarm des Hebels voneinander abgrenzt, wobei das erste Greifelement mit dem ersten Hebelarm bewegungsgekoppelt ist, wobei das zweite Greifelement mit dem Schraubbolzen gegen den zweiten Hebelarm verspannbar ist.

Der erste und/oder der zweite Profilstab sind vorzugsweise aus Aluminium im Strangpressverfahren hergestellt, wobei sie sich mit einer konstanten Querschnittsform entlang einer jeweiligen Profilachse erstrecken. Die hinterschnittene Nut ist im Querschnitt betrachtet vorzugsweise T-förmig ausgebildet. Das erste und/oder das zweite Greifelement sind vorzugsweise jeweils T-förmig in der Art eines Nutensteins bzw. einer Hammermutter ausgebildet. Die erste und die zweite Anlagefläche sind vorzugsweise eben ausgebildet. Sie können mehrere gesonderte Teilflächen umfassen, die in einer gemeinsamen Ebene angeordnet sind. Die erste und die zweite Anlagefläche sind vorzugsweise in einem von 180° verschiedenen Winkel relativ zueinander angeordnet, wobei der genannte Winkel höchst vorzugsweise 90° beträgt.

In den abhängigen Ansprüchen sind vorteilhafte Weiterbildungen und Verbesserungen der Erfindung angegeben.

Es kann vorgesehen sein, dass die erste und die zweite Anlagefläche jeweils eine Anlageebene definieren, wobei sich die beiden Anlageebenen unter einem von 180° verschiedenen Winkel in einer Verschneidungslinie schneiden, wobei eine Drehachse des Drehgelenks parallel zur Verschneidungslinie angeordnet ist. Mit dieser Anordnung der Drehachse liegen das erste und das zweite Greifelement im verspannten Zustand in einer günstigen Lage an der jeweils zugeordneten hinterschnittenen Nut an. Weiter wird die Schwenkbeweglichkeit des Hebels durch die beiden, dem Verbinder zugeordneten hinterschnittenen Nuten, nicht behindert. Das Drehgelenk ist vorzugsweise ausschließlich bezüglich der genannten Drehachse dreh- bzw. schwenkbeweglich. In Richtung der Drehachse kann dabei eine minimale, spielbedingte Beweglichkeit vorhanden sein.

Es kann vorgesehen sein, dass die Drehachse auf der vom ersten Profilstab abgewandten Seite der ersten Anlagefläche und auf der vom zweiten Profilstab abgewandten Seite der zweiten Anlagefläche angeordnet ist. Hierdurch ergibt sich eine günstige Spannwirkung des Hebels. Der Hebel kann darüber hinaus auf einfache Weise am Grundkörper des Verbinders kippbeweglich gelagert werden.

Es kann vorgesehen sein, dass der Schraubbolzen den zweiten Hebelarm durchsetzt, wobei er in das zweite Greifelement eingeschraubt ist, wobei der Schraubbolzen den Grundkörper durchsetzt. Damit kann der Verbinder mittels des Schraubbolzens auf einfache Weise mit dem ersten und dem zweiten Profilkörper verklemmt werden. Der Schraubbolzen durchsetzt den Grundkörper vorzugsweise im Bereich der zweiten Anlagefläche.

Es kann vorgesehen sein, dass der erste Hebelarm zusammen mit dem ersten Greifelement den Grundkörper durchsetzt. Damit kann das erste Greifelement in die hinterschnittene Nut am ersten Profilstab eingreifen. Der erste Hebelarm durchsetzt den Grundkörper vorzugsweise im Bereich der ersten Anlagefläche.

Es kann vorgesehen sein, dass das erste Greifelement einstückig mit dem ersten Hebelarm ausgebildet ist. Vorzugsweise ist der zweite Hebelarm einstückig mit dem ersten Hebelarm ausgebildet. Hierdurch ergibt sich ein besonders einfacher und kostengünstiger Verbinder.

Es kann vorgesehen sein, dass das Drehgelenk einen Zylinderstift umfasst, welcher den Hebel durchsetzt, wobei er auf beiden gegenüberliegenden Seiten des Hebels im Grundkörper ausgenommen ist. Ein derartiges Drehgelenk ist besonders einfach und kostengünstig. Weiter kann es die im Betrieb auftretenden Klemmkräfte sicher abstützen, ohne dass ein Bruch des Drehgelenks zu befürchten ist. Der Zylinderstift kann in den Grundkörper eingepresst sein, wobei der Hebel mit Spiel auf dem Zylinderstift läuft. Es ist aber auch denkbar, dass der Zylinderstift in den Hebelarm eingepresst ist, wobei er mit Spiel im Grundkörper läuft. Die Mittelachse des kreiszylindrischen Zylinderstifts fällt vorzugsweise mit der Drehachse zusammen.

Es kann vorgesehen sein, dass die erste und die zweite Anlagefläche senkrecht zueinander angeordnet sind, wobei der Schraubbolzen parallel zur ersten Anlagefläche angeordnet ist. Damit kann bei einem vorgegebenen Anzugsmoment am Schraubbolzen eine optimale Klemmwirkung des Verbinders erzielt werden.

Es kann vorgesehen sein, dass der maximale Schwenkwinkel des Hebels zwischen 10° und 45° beträgt. Dieser Schwenkwinkel wird typischerweise durch die Abmessungen des ersten und/oder des zweiten Durchbruchs im Grundkörper bestimmt, welche weiter unten näher erläutert werden. Mit der vorgeschlagenen Auswahl des Schwenkwinkels ergibt sich ein besonders kompakter Verbinder, der überdies einfach am ersten und am zweiten Profilstab zu montieren ist.

Es kann vorgesehen sein, dass das erste Greifelement derart fest am ersten Hebelarm angeordnet ist, dass es in einer gespannten Stellung des Verbinders senkrecht zur ersten Anlagefläche ausgerichtet ist. Damit werden durch die Klemmkraft bedingte plastische Verformungen am ersten Profilstab minimiert. Es ist ebenso denkbar, zwischen dem ersten Greifelement und dem ersten Hebelarm ein Drehgelenk vorzusehen. Dies ist aber aufwändiger als die bevorzugte feste Anordnung des ersten Greifelements am ersten Hebelarm. Vorzugsweise ist das erste Greifelement einstückig mit dem ersten Hebelarm ausgebildet.

Schutz wird außerdem für einen Bausatz mit einem erfindungsgemäßen Verbinder nach den Ansprüchen 11 und 12 beansprucht.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine perspektivische Ansicht eines Bausatzes mit einem erfindungsgemäßen Verbinder und einem ersten und einem zweiten Profilstab;
- Fig. 2: eine perspektivische Ansicht des Hebels mit dem ersten und dem zweiten Greifelement des Verbinders nach Fig. 1;
- Fig. 3: eine perspektivische Ansicht des Grundkörpers des Verbinders nach Fig. 1; und
- Fig. 4: eine weitere perspektivische Ansicht des Grundkörpers des Verbinders nach Fig. 1.

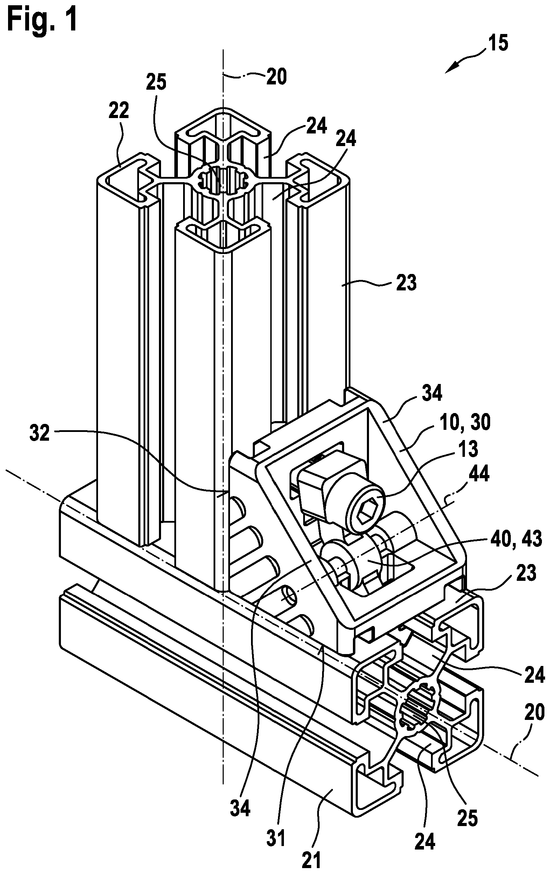

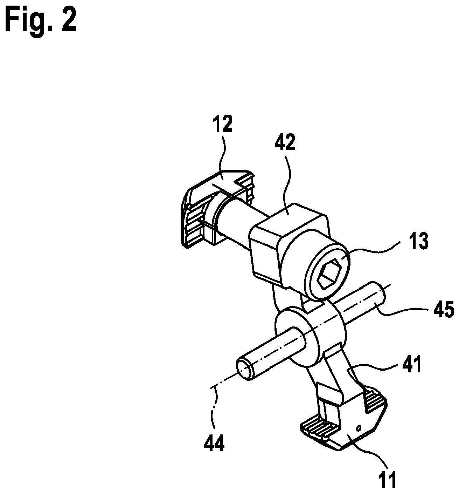

Fig. 1 zeigt eine perspektivische Ansicht eines Bausatzes 15 mit einem erfindungsgemäßen Verbinder 10 und einem ersten und einem zweiten Profilstab 21; 22. Die beiden Profilstäbe 21; 22 sind aus Aluminium im Strangpressverfahren hergestellt, so dass sie sich mit einer konstanten Querschnittsform entlang einer jeweils zugeordneten Profilachse 20 erstrecken. Die Querschnittsformen der beiden Profilstäbe 21; 22 sind vorliegend identisch ausgebildet, wobei es ebenso denkbar ist, unterschiedlich ausgeführte Profilstäbe miteinander zu verbinden. Im Rahmen der vorliegenden Erfindung kommt es nur darauf an, dass die Profilstäbe 21; 22 jeweils eine ebene Seitenfläche 23 haben, die zur Anlage mit einer zugeordneten ersten bzw. zweiten Anlagefläche 31; 32 des Verbinders 10 gebracht werden kann, wobei in dieser Seitenfläche 23 jeweils eine hinterschnittene, insbesondere T-förmige, Nut 24 angeordnet ist, in welche das erste bzw. das zweite Greifelement (Nr. 1; 12 in Fig. 2) eingreifen kann.

Die Querschnittsform der beiden Profilstäbe 21; 22 ist vorliegend quadratisch ausgebildet, wobei an jeder Quadratseite eine T-förmige, hinterschnittene Nut 24 angeordnet ist. In der Mitte der Querschnittsform ist ein Schraubkanal 25 vorgesehen, in welche ein selbstschneidender Schraubbolzen von der Stirnseite her eingeschraubt werden kann. Im Übrigen ist die Querschnittsform entsprechend den Anforderungen des Strangpressverfahrens ausgeführt. Es wurde insbesondere darauf geachtet, dass überall eine im Wesentlichen konstante Wanddicke vorhanden ist, so dass sich der Profilstab beim Abkühlen nach dem Strangpressen nicht verzieht.

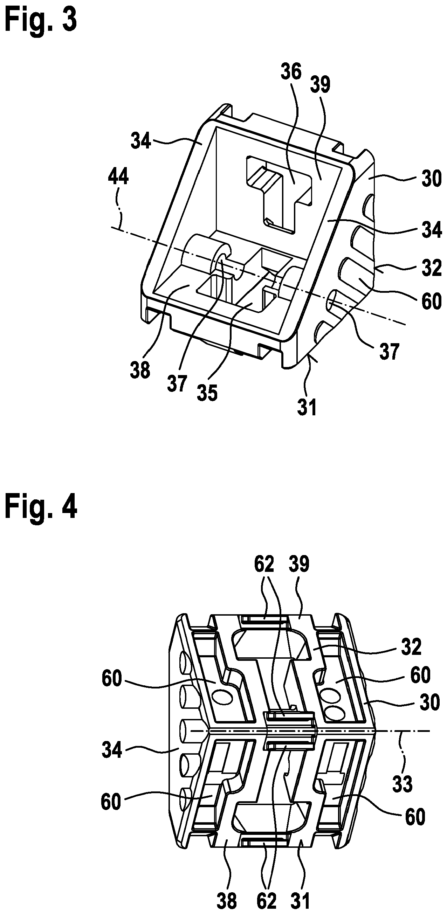

Der Verbinder 10 umfasst einen Grundkörper 30, welcher vorzugsweise im Druckgussverfahren hergestellt ist, wobei er vorzugsweise aus Aluminium oder aus Zink besteht. Die Gestaltung des Grundkörpers 30 wird unten mit Bezug auf Fig. 3 und 4 näher erläutert.

In dem Grundkörper 30 ist ein Hebel 40 bezüglich einer Drehachse 44 drehbar aufgenommen. Die Drehachse 44 verläuft parallel zur Verschneidungslinie (Nr. 33 in Fig. 4), in der sich die beiden Anlageebenen, die von der ersten und der zweiten Anlagefläche 31; 32 definiert werden, schneiden. Sie ist jeweils auf der von dem betreffenden Profilstab 21; 22 abgewandten Seite der betreffenden Anlagefläche 31; 32 angeordnet, so dass sie die beiden Seitenwände 34 des Grundkörpers 30 schneidet.

Fig. 2 zeigt eine perspektivische Ansicht des Hebels 40 mit dem ersten und dem zweiten Greifelement 11; 12 des Verbinders 10 nach Fig. 1. Der Hebel 40 hat einen ersten und einen zweiten Hebelarm 41; 42, die auf gegenüberliegenden Seiten der Drehachse 44 angeordnet sind, wobei sie einstückig miteinander verbunden ist. Am ersten Hebelarm 41 ist ein erstes Greifelement 11 einstückig angeordnet. Das erste Greifelement 11 ist T-förmig ausgebildet, wobei seine Form analog der oben angesprochenen Hammermutter ausgeführt ist. Der erste Hebelarm 41 zusammen mit dem ersten Greifelement 11 durchsetzt einen ersten Durchbruch (Nr. 35 in Fig. 3) im Grundkörper so, dass das erste Greifelement 11 in die zugeordnete hinterschnittene Nut eingreifen kann, wobei die Beweglichkeit des Hebels 40 gewährleistet ist.

Dem zweiten Hebelarm 42 ist ein gesondertes zweites Greifelement 12 zugeordnet, welches von einer, aus dem oben genannten Katalog bekannten, Hammermutter gebildet wird. In das zweite Greifelement 12 ist ein Schraubbolzen 13 eingeschraubt, welcher einen zugeordneten, kreisrunden oder langlochförmigen Durchbruch im zweiten Hebelarm 42 durchsetzt. Der Durchmesser bzw. die Länge dieses Durchbruchs ist so gewählt, dass sich der Schraubbolzen während des Festdrehens innerhalb des Durchbruchs frei bewegen kann. Im Bereich des Durchbruchs ist der zweite Hebelarm 42 verstärkt ausgebildet, so dass der Kopf des Schraubbolzens 13 in jeder Stellung des Hebels 40 eine genügend große Auflagefläche am zweiten Hebelarm 42 findet. Der Schraubbolzen 13 ist vorliegend als Zylinderkopfschraube ausgeführt. Der Schraubbolzen 13 durchsetzt den zweiten Durchbruch (Nr. 36 in Fig. 3) im Grundkörper, so dass das zweite Greifelement 12 in die zugeordnete hinterschnittene Nut eingreifen kann.

Das Drehgelenk 43 wird von einer bezüglich der Drehachse 44 kreiszylindrischen Bohrung im Hebel 40 und einem Zylinderstift 45, welcher die genannte Bohrung durchsetzt, gebildet. In den beiden Seitenwänden des Grundkörpers ist jeweils eine bezüglich der Drehachse 44 kreiszylindrische Aufnahmebohrung (Nr. 37 in Fig. 3) vorgesehen, welche ebenfalls vom Zylinderstift 45 durchsetzt wird. Dabei kann im Bereich der Aufnahmebohrung ein Presssitz vorgesehen sein, wobei im Bereich des Hebels 40 Spiel zwischen Zylinderstift 45 und Hebel 40 vorgesehen ist. Genauso gut ist es denkbar, dass zwischen dem Zylinderstift 45 und dem Hebel 40 ein Presssitz vorgesehen ist, wobei zwischen den Aufnahmebohrungen und dem Zylinderstift 45 Spiel vorgesehen ist. In beiden Fällen ist der Hebel 40 bezüglich der Drehachse 44 schwenkbar. Der mögliche Schwenkbereich wird dabei durch den ersten und/oder den zweiten Durchbruch (Nr. 35; 36 in Fig. 3) definiert.

Anzumerken ist noch, dass der Hebel 40 im Bereich des Drehgelenks so verstärkt wurde, dass um den Zylinderstift herum überall eine Mindestmaterialstärke vorhanden ist. Damit wird vermieden, dass der Hebel 40 im Bereich des Drehgelenks 43 bricht.

Fig. 3 zeigt eine perspektivische Ansicht des Grundkörpers 30 des Verbinders nach Fig. 1. Fig. 4 zeigt eine weitere perspektivische Ansicht des Grundkörpers 30 des Verbinders nach Fig. 1 von der bezüglich Fig. 3 gegenüberliegenden Seite her.

Der Grundkörper 30 ist einstückig ausgebildet, wobei er eine erste und eine zweite Anlagewand 38; 39 und zwei Seitenwände 34 aufweist. Die genannten Wände 38; 39; 34 sind jeweils im Wesentlichen in Form einer ebenen Platte mit konstanter Dicke ausgebildet. Dort vorgesehene Ausnehmungen 60 sind in erster Linie der materialsparenden und verzugsarmen Herstellung des Grundkörpers geschuldet. Die erste Anlagewand 38 bildet eine ebene erste Anlagefläche 31, wobei die zweite Anlagewand 39 eine zweite Anlagefläche 32 bildet. Die erste und die zweite Anlagefläche 31; 32 sind vorliegend in einem Winkel von 90° relativ zueinander angeordnet, wobei grundsätzlich jeder Winkel verschieden von 180° verwendbar ist, wobei Winkel im Bereich zwischen 30° und 150° bevorzugt sind. Die von der ersten und der zweiten Anlagefläche 31; 32 definierten Anlageebenen schneiden sich in der geraden Verschneidungslinie 33. Die beiden ebenen Seitenwände 34 sind senkrecht zur Verschneidungslinie 33 ausgerichtet, wobei sie an gegenüberliegenden Enden des Grundkörpers 30 angeordnet sind, so dass sich zwischen den Seitenwänden 34 ein Freiraum ergibt, in welchem der Hebel angeordnet ist. Die Seitenwände 34 dienen in erster Linie der Versteifung des Grundkörpers 30, wobei sie außerdem einen Teil der Aufnahme für den Zylinderstift bildet. Namentlich durchsetzen die beiden Aufnahmebohrungen 37 jeweils eine zugeordnete Seitenwand.

In der ersten Anlagewand 38 ist im Bereich der ersten Anlagefläche 31 ein erster Durchbruch 35 angeordnet, welcher T-förmig ausgebildet ist. Der erste Hebelarm durchsetzt den ersten Durchbruch 35. In der zweiten Anlagewand 39 ist im Bereich der zweiten Anlagefläche 32 ein zweiter Durchbruch 36 angeordnet, welcher T-förmig ausgebildet ist. Der zweite Hebelarm durchsetzt den zweiten Durchbruch 36.

Hinzuweisen ist noch auf die optionalen Ausrichtfortsätze 61, wobei jeweils zwei Ausrichtfortsätze 61 an der ersten und der zweiten Anlagewand 38; 39 angeordnet sind. Die Ausrichtfortsätze 61 sind so ausgebildet, dass sie formschlüssig in die jeweils zugeordnete hinterschnittene Nut eingreifen. Hierdurch vereinfacht sich das Ansetzen des Verbinders an den ersten und den zweiten Profilstab.

### Bezugszeichen

- 10: Verbinder
- 11: erstes Greifelement
- 12: zweites Greifelement
- 13: Schraubbolzen
- 15: Bausatz

- 20: Profilachse
- 21: erster Profilstab
- 22: zweiter Profilstab
- 23: Seitenfläche
- 24: hinterschnittene Nut
- 25: Schraubkanal

- 30: Grundkörper
- 31: erste Anlagefläche
- 32: zweite Anlagefläche
- 33: Verschneidungslinie
- 34: Seitenwand
- 35: erster Durchbruch
- 36: zweiter Durchbruch
- 37: Aufnahmebohrung
- 38: erste Anlagewand
- 39: zweite Anlagewand

- 40: Hebel
- 41: erster Hebelarm
- 42: zweiter Hebelarm
- 43: Drehgelenk
- 44: Drehachse
- 45: Zylinderstift
- 60: Ausnehmungen
- 61: Ausrichtfortsatz

## Patentansprüche

1. Verbinder (10) zur Verwendung mit einem ersten und einem zweiten Profilstab (21; 22), welche jeweils wenigstens eine Seitenfläche (23) mit einer hinterschnittenen Nut (24) aufweisen, wobei der Verbinder (10) einen Grundkörper (30) umfasst, der eine erste und eine zweite Anlagefläche (31; 32) aufweist, die an einer jeweils zugeordneten Seitenfläche (23) des ersten bzw. des zweiten Profilstabs (21; 22) anlegbar sind, wobei der Verbinder (10) ein erstes und ein zweites Greifelement (11; 12) umfasst, welche in eine jeweils zugeordnete hinterschnittene Nut (24) des ersten bzw. des zweiten Profilstabs (21; 22) eingreifen können, wobei ein Schraubbolzen (13) vorgesehen ist,
**dadurch gekennzeichnet, dass** ein Hebel (40) vorgesehen ist, der an dem Grundkörper (30) in einem Drehgelenk (43) drehbar gelagert ist, wobei das Drehgelenk (43) einen ersten und einen zweiten Hebelarm (41; 42) des Hebels (40) voneinander abgrenzt, wobei das erste Greifelement (11) mit dem ersten Hebelarm (41) bewegungsgekoppelt ist, wobei das zweite Greifelement (12) mit dem Schraubbolzen (13) gegen den zweiten Hebelarm (42) verspannbar ist.

2. Verbinder nach Anspruch 1,
wobei die erste und die zweite Anlagefläche (31; 32) jeweils eine Anlageebene definieren, wobei sich die beiden Anlageebenen unter einem von 180° verschiedenen Winkel in einer Verschneidungslinie (33) schneiden, wobei eine Drehachse (44) des Drehgelenks (43) parallel zur Verschneidungslinie (33) angeordnet ist.

3. Verbinder nach einem der vorstehenden Ansprüche,
wobei die Drehachse (44) auf der vom ersten Profilstab (21) abgewandten Seite der ersten Anlagefläche (31) und auf der vom zweiten Profilstab (22) abgewandten Seite der zweiten Anlagefläche (32) angeordnet ist.

4. Verbinder nach einem der vorstehenden Ansprüche,
wobei der Schraubbolzen (13) den zweiten Hebelarm (42) durchsetzt, wobei er in das zweite Greifelement (12) eingeschraubt ist, wobei der Schraubbolzen (13) den Grundkörper (30) durchsetzt.

5. Verbinder nach einem der vorstehenden Ansprüche,
wobei der erste Hebelarm (41) zusammen mit dem ersten Greifelement (11) den Grundkörper (30) durchsetzt.

6. Verbinder nach einem der vorstehenden Ansprüche,
wobei das erste Greifelement (11) einstückig mit dem ersten Hebelarm (41) ausgebildet ist.

7. Verbinder nach einem der vorstehenden Ansprüche,
wobei das Drehgelenk (43) einen Zylinderstift (45) umfasst, welcher den Hebel (40) durchsetzt, wobei er auf beiden gegenüberliegenden Seiten des Hebels (40) im Grundkörper (30) ausgenommen ist.

8. Verbinder nach einem der vorstehenden Ansprüche,
wobei die erste und die zweite Anlagefläche (31; 32) senkrecht zueinander angeordnet sind, wobei der Schraubbolzen (13) parallel zur ersten Anlagefläche (31) angeordnet ist.

9. Verbinder nach einem der vorstehenden Ansprüche,
wobei der maximale Schwenkwinkel des Hebels (40) zwischen 10° und 45° beträgt.

10. Verbinder nach einem der vorstehenden Ansprüche,
wobei das erste Greifelement (11) derart fest am ersten Hebelarm (41) angeordnet ist, dass es in einer gespannten Stellung des Verbinders senkrecht zur ersten Anlagefläche (31) ausgerichtet ist.

11. Bausatz umfassend einen ersten und einen zweiten Profilstab (21; 22), welche jeweils wenigstens eine Seitenfläche (23) mit einer hinterschnittenen Nut (24) aufweisen, und einen Verbinder (10) nach einem der vorstehenden Ansprüche.

12. Bausatz nach Anspruch 11,
wobei das erste Greifelement (11) in eine hinterschnittene Nut (24) des ersten Profilstabs (21) eingreift, wobei das zweite Greifelement (12) in eine hinterschnittene Nut des zweiten Profilstabs (22) eingreift, wobei die erste Anlagefläche (31) an einer zugeordneten Seitenfläche (23) des ersten Profilstabs (21) anliegt, wobei die zweite Anlagefläche (32) an einer zugeordneten Seitenfläche (23) des zweiten Profilstabs (22) anliegt.

## Claims

1. Connector (10) for use with a first and a second profile bar (21; 22) which have in each case at least one lateral face (23) having an undercut groove (24), wherein the connector (10) comprises a main body (30) which has a first and a second bearing face (31; 32) which are able to be placed on a respective assigned lateral face (23) of the first or the second profile bar (21; 22), respectively, wherein the connector (10) comprises a first and a second gripping element (11; 12) which can engage in a respective assigned undercut groove (24) of the first or the second profile bar (21; 22), respectively, wherein a threaded bolt (13) is provided,
**characterized in that** a lever (40) which is rotatably mounted in a rotary joint (43) on the main body (30) is provided, wherein the rotary joint (43) delimits a first and a second lever arm (41; 42) of the lever (40) from one another, wherein the first gripping element (11) for movement is coupled to the first lever arm (41), wherein the second gripping element (12) by way of the threaded bolt (13) is able to be braced in relation to the second lever arm (42).

2. Connector according to Claim 1,
wherein the first and the second bearing face (31; 32) define in each case one bearing plane, wherein the two bearing planes in an intersection line (33) intersect one another at an angle that differs from 180°, wherein a rotation axis (44) of the rotary joint (43) is disposed so as to be parallel to the intersection line (33).

3. Connector according to either of the preceding claims,
wherein the rotation axis (44) is disposed on that side of the first bearing face (31) that faces away from the first profile bar (21) and on that side of the second bearing face (32) that faces away from the second profile bar (22).

4. Connector according to one of the preceding claims,
wherein the threaded bolt (13) penetrates the second lever arm (42), wherein said threaded bolt (13) is screwed into the second gripping element (12), wherein the threaded bolt (13) penetrates the main body (30).

5. Connector according to one of the preceding claims,
wherein the first lever arm (41) conjointly with the first gripping element (11) penetrates the main body (30).

6. Connector according to one of the preceding claims,
wherein the first gripping element (11) is configured so as to be integral to the first lever arm (41).

7. Connector according to one of the preceding claims,
wherein the rotary joint (43) comprises a cylindrical pin (45) which penetrates the lever (40), wherein said cylindrical pin (45) is recessed on both opposite sides of the lever (40) in the main body (30).

8. Connector according to one of the preceding claims, wherein the first and the second bearing face (31; 32) are disposed so as to be mutually perpendicular, wherein the threaded bolt (13) is disposed so as to be parallel to the first bearing face (31).

9. Connector according to one of the preceding claims,
wherein the maximum pivot angle of the lever (40) is between 10° and 45°.

10. Connector according to one of the preceding claims,
wherein the first gripping element (11) is fixedly disposed on the first lever arm (41) in such a manner that said first gripping element (11) in a tensioned position of the connector is aligned so as to be perpendicular to the first bearing face (31) .

11. Parts kit comprising a first and a second profile bar (21; 22) which have in each case at least one lateral face (23) having an undercut groove (24), and a connector (10) according to one of the preceding claims.

12. Parts kit according to Claim 11,
wherein the first gripping element (11) engages in an undercut groove (24) of the first profile bar (21), wherein the second gripping element (12) engages in an undercut groove of the second profile bar (22), wherein the first bearing face (31) bears on an assigned lateral face (23) of the first profile bar (21), wherein the second bearing face (32) bears on an assigned lateral face (23) of the second profile bar (22).

## Revendications

1. Connecteur (10) destiné à être utilisé avec une première et une deuxième barre profilée (21 ; 22), qui comprennent chacune au moins une surface latérale (23) munie d'une rainure en contre-dépouille (24), le connecteur (10) comportant un corps de base (30), qui comprend une première et une deuxième surface d'appui (31 ; 32), qui peuvent s'appuyer sur une surface latérale (23) associée respective de la première ou de la deuxième barre profilée (21 ; 22), le connecteur (10) comportant un premier et un deuxième élément de préhension (11 ; 12), qui peuvent pénétrer dans une rainure en contre-dépouille (24) associée respective de la première ou de la deuxième barre profilée (21 ; 22), un boulon fileté (13) étant prévu,
**caractérisé en ce qu'**un levier (40) est prévu, qui est monté de manière rotative sur le corps de base (30) dans une articulation tournante (43), l'articulation tournante (43) séparant l'un de l'autre un premier et un deuxième bras de levier (41 ; 42) du levier (40), le premier élément de préhension (11) étant couplé en mouvement avec le premier bras de levier (41), le deuxième élément de préhension (12) pouvant être serré avec le boulon fileté (13) contre le deuxième bras de levier (42).

2. Connecteur selon la revendication 1,
la première et la deuxième surface d'appui (31 ; 32) définissant chacune un plan d'appui, les deux plans d'appui se coupant en une ligne d'intersection (33) à un angle différent de 180°, un axe de rotation (44) de l'articulation tournante (43) étant agencé parallèlement à la ligne d'intersection (33).

3. Connecteur selon l'une quelconque des revendications précédentes,
l'axe de rotation (44) étant agencé sur le côté de la première surface d'appui (31) détourné de la première barre profilée (21) et sur le côté de la deuxième surface d'appui (32) détourné de la deuxième barre profilée (22).

4. Connecteur selon l'une quelconque des revendications précédentes,
le boulon fileté (13) traversant le deuxième bras de levier (42), celui-ci étant vissé dans le deuxième élément de préhension (12), le boulon fileté (13) traversant le corps de base (30).

5. Connecteur selon l'une quelconque des revendications précédentes,
le premier bras de levier (41) traversant le corps de base (30) conjointement avec le premier élément de préhension (11).

6. Connecteur selon l'une quelconque des revendications précédentes,
le premier élément de préhension (11) étant configuré d'un seul tenant avec le premier bras de levier (41).

7. Connecteur selon l'une quelconque des revendications précédentes,
l'articulation tournante (43) comportant une goupille cylindrique (45), qui traverse le levier (40), celle-ci étant encastrée dans le corps de base (30) sur les deux côtés opposés du levier (40).

8. Connecteur selon l'une quelconque des revendications précédentes,
la première et la deuxième surface d'appui (31 ; 32) étant agencées perpendiculairement l'une à l'autre, le boulon fileté (13) étant agencé parallèlement à la première surface d'appui (31).

9. Connecteur selon l'une quelconque des revendications précédentes,
l'angle de basculement maximal du levier (40) étant compris entre 10° et 45°.

10. Connecteur selon l'une quelconque des revendications précédentes,
le premier élément de préhension (11) étant agencé de manière fixe sur le premier bras de levier (41) de telle sorte qu'il est orienté perpendiculairement à la première surface d'appui (31) dans une position serrée du connecteur.

11. Jeu de pièces comportant une première et une deuxième barre profilée (21 ; 22), qui comprennent chacune au moins une surface latérale (23) munie d'une rainure en contre-dépouille (24), et un connecteur (10) selon l'une quelconque des revendications précédentes.

12. Jeu de pièces selon la revendication 11,
le premier élément de préhension (11) pénétrant dans une rainure en contre-dépouille (24) de la première barre profilée (21), le deuxième élément de préhension (12) pénétrant dans une rainure en contre-dépouille de la deuxième barre profilée (22), la première surface d'appui (31) s'appuyant sur une surface latérale (23) associée de la première barre profilée (21), la deuxième surface d'appui (32) s'appuyant sur une surface latérale (23) associée de la deuxième barre profilée (22).
